(19) **Europäisches Patentamt**

**European Patent Office**

**Office européen des brevets**

(11) **EP 0 607 755 B1**

(12) **EUROPÄISCHE PATENTSCHRIFT**

(45) Veröffentlichungstag und Bekanntmachung des Hinweises auf die Patenterteilung:
**29.03.2000 Patentblatt 2000/13**

(51) Int. Cl.[7]: **H04B 7/26**, **H04J 13/00**

(21) Anmeldenummer: **93810914.7**

(22) Anmeldetag: **27.12.1993**

(54) **Verfahren zur Übertragung von Daten in einem zellularen Mobilfunksystem**

Method for data transmission in a cellular mobile radio system

Procédé de transmission de données dans un système radio cellulaire

(84) Benannte Vertragsstaaten:
**CH DE FR GB LI NL SE**

(30) Priorität: **18.01.1993 CH 11893**

(43) Veröffentlichungstag der Anmeldung:
**27.07.1994 Patentblatt 1994/30**

(73) Patentinhaber: **ASCOM TECH AG**
**3018 Bern (CH)**

(72) Erfinder:
• **Ruprecht, Jürg Dr.**
  **CH-3074 Muri (CH)**
• **Guenther, Christoph, Dr.**
  **CH-5442 Fislisbach (CH)**
• **De Weck, Jean-Paul**
  **CH-1754 Avry-sur-Matran (CH)**

(74) Vertreter:
**Roshardt, Werner Alfred, Dipl.-Phys. et al**
**Keller & Partner**
**Patentanwälte AG**
**Zeughausgasse 5**
**Postfach**
**3000 Bern 7 (CH)**

(56) Entgegenhaltungen:
**EP-A- 0 361 299       WO-A-92/17989**
**US-A- 5 164 958**

• **1986 INTERNATIONAL ZURICH SEMINAR ON DIGITAL COMMUNICATIONS, 11. März 1986, ZURICH (CH) Seiten 53 - 59 A.EIZENHÖFER ET AL 'RATIONALE AND POTENTIAL OF THE HYBRID SYSTEM APPROACH MATS-D FOR FUTURE DIGITAL MOBILE COMMUNICATION'**

## Beschreibung

### Technisches Gebiet

Die Erfindung betrifft ein Verfahren zur Uebertragung von Daten in einem zellularen Mobilfunksystem mit einer stationären Sendeeinrichtung für jede Zelle und mehreren Mobilfunkteilnehmern in einer Zelle, wobei die Daten zwecks Uebertragung jeweils einerseits mit einer Spreizsequenz gespreizt und andererseits einer Trägerschwingung aufmoduliert werden, um dann als Uebertragungssignal übermittelt zu werden. Ferner betrifft die Erfindung eine Mobilfunkanlage zur Durchführung dieses Verfahrens und eine Sendeeinrichtung für eine solche Mobilfunkanlage.

### Stand der Technik

Das Problem, das es bei zellularen Mobilfunksystemen zu lösen resp. zu optimieren gilt, besteht darin, möglichst viele Benutzer unter optimaler Ausnützung des Frequenzbereiches gleichzeitig zu bedienen, wobei der Störsignalanteil resp. der Rauschanteil möglichst gering gehalten werden soll. Dieses Problem kann auf verschiedene Weise angegangen werden.

Bei FDMA-Systemen (FDMA = Frequency Division Multiple Access) werden die Signale verschiedener Benutzer in nicht überlappenden Frequenzbändern übertragen. Dies hat den Vorteil einer perfekten Orthogonalität der verschiedenen Benutzersignale, was eine minimale gegenseitige Störung der Benutzer untereinander bedeutet. Nachteilig ist die typischerweise geringe Bandbreite, die zu Schwund (Fading) führt. Dies kann das Signal-zu-Rausch-Verhältnis unter den für einen befriedigenden Empfang nötigen Pegel drükken.

Systeme mit erhöhter Bandbreite sind robuster gegenüber frequenzselektivem Schwund, da sie die durch die Mehrwegausbreitung interferierenden Signale auflösen können. Von diesem Prinzip macht z. B. die DSSS-Technik (DSSS = Direct Sequence Spread Spectrum) Gebrauch. Dabei werden die zu übertragenden Daten mit einer Spreizsequenz, deren Rate ein Vielfaches der Bit-Rate ist, vor dem Uebertragen gespreizt und im Empfänger unter Zuhilfenahme derselben Spreizsequenz wieder entspreizt. Als Spreizsequenzen werden sog. PN-Sequenzen quenzen (PN = Pseudo Noise) oder mit Vorteil m-Sequenzen eingesetzt. Beim sog. CDMA-System (CDMA = Code Division Multiple Access) benutzen alle Teilnehmer dasselbe Frequenzband, sind aber unter sich durch die Benutzung unterschiedlicher Spreizsequenzen getrennt. Da die Spreizsequenzen nicht vollständig orthogonal zueinander gewählt werden können, besteht beim CDMA-System ein hoher Störsignalanteil von den übrigen Benutzern. Das Schwergewicht beim Empfänger muss daher auf die Unterdrückung der Benutzerinterferenzen gelegt werden.

Aus der WO 92/17989 ist ein zellulares, drahtloses Kommunikationssystem bekannt, das die Anzahl der Zellen mit verschiedenen Spreizsequenzen minimiert, indem in benachbarten Zellen für die Übertragung von Signalen bevorzugt jeweils unterschiedliche Frequenzen und unterschiedliche Spreizsequenzen benutzt werden. Es reicht aber auch aus, wenn in benachbarten Zellen jeweils nur verschiedene Frequenzen und identische Spreizsequenzen benutzt werden. Bevorzugt wird ein System mit drei Spreizsequenzen, welche eine möglichst geringe Kreuz-Korrelation aufweisen und so ein Kommunikationssystem ermöglichen, welches nur drei verschiedene Arten von Zellen aufweist.

Ein CDMA-System der eingangs genannten Art ist z. B. aus dem Artikel "Equalization for Interference Cancellation in Spread Spectrum Multiple Access Schemes", M. Abdulrahman et al, Proceedings VTC'92, vol. 1, pp. 71-74, May 1992 bekannt. Zur Verbesserung der Empfangsqualität wird die Verwendung eines sog. Fractionally Spaced DFE (DFE = Decision Feedback Equalizer) vorgeschlagen, bei welchem der Empfänger nur die eigene Spreizsequenz kennt und keine expliziten Informationen über die Spreizsequenzen fremder Benutzer, deren Energien oder Kanalparameter hat. Ein Fractionally Spaced DFE-Empfänger für synchrone interferierende Signale ist ferner aus dem Artikel "Cyclostationary Crosstalk Suppression by Decision Feedback Equalization on Digital Subscriber Loops", M. Abdulrahman et al, IEEE trans. Sel. Areas Commun., vol. 10, pp. 640-649, April 1992 bekannt.

### Darstellung der Erfindung

Aufgabe der Erfindung ist es, ein Verfahren der eingangs genannten Art anzugeben, das die beim Stand der Technik vorhandenen Probleme vermeidet und insbesondere einen geringen Störsignalanteil und eine hohe Schwundresistenz aufweist.

Gemäss der Erfindung besteht die Lösung darin, dass bei einem Verfahren der eingangs genannten Art innerhalb einer Zelle alle Uebertragungssignale mit derselben Spreizsequenz gespreizt sind und verschiedene Uebertragungssignale in frequenzmässig gegeneinander verschobenen Frequenzbändern übertragen werden.

Die Orthogonalität der Benutzer innerhalb einer Zelle ist durch die Frequenzteilung weitgehend gesichert, während die Schwundanfälligkeit durch das Spreizen reduziert wird. Dieses System kann als Code Frequency Division Multiple Access (CFDMA) bezeichnet werden.

Gemäss einer ersten bevorzugten Ausführungsform werden in benachbarten Zellen die Uebertragungssignale stets mit unterschiedlichen Spreizsequenzen gespreizt. Dadurch wird eine Trennung der Signale von verschiedenen Sendern im Randbereich der Zellen sichergestellt.

Alternativ (oder zusätzlich) kann dafür gesorgt werden, dass in benachbarten Zellen verschiedene Uebertragungssignale stets in verschiedenen Frequenzbändern übertragen werden. Dies erfordert zwar eine gewisse Frequenzplanung, hat aber den Vorteil der Orthogonalität der Signale in benachbarten Zellen. Ferner kann im ganzen Netzwerk eine einzige Spreizsequenz benutzt werden.

Die Trägerschwingungen verschiedener Mobilfunkteilnehmer sollten zumindest etwa $2\pi/T_b$, $T_b$ = Bitdauer, beabstandet sein. Vorzugsweise sind die Trägerschwingungen um ein ganzzahliges Vielfaches davon gegeneinander verschoben. Es ist zu beachten, dass bei der Erfindung die Frequenzbänder verschiedener Mobilfunkteilnehmer nicht vollständig getrennt, sondern teilweise überlappend sind. Bei einer vollständigen Trennung der gespreizten Signale müssten die Trägerschwingungen um zumindest $2\pi/T_c$, $T_c$ = Chipdauer, voneinander getrennt sein. Dies aber ist nicht im Sinne der Erfindung.

Vorzugsweise werden die Trägerschwingungen der Uebertragungssignale verschiedener Mobilfunkteilnehmer einer Zelle phasenstarr zueinander gehalten (d. h. sie unterscheiden sich exakt um ganzzahlige Vielfache von $2\pi/T_b$). Durch entsprechende Filterung können andere Spektralanteile ausgefiltert werden, deren Mittenfrequenzen ungleich den Frequenzen der Trägerschwingungen sind. Es können durch entsprechende Filterung die Spektren so ausgefiltert werden, dass jeder Benutzer in seinem HF-Teil dieselbe Mittenfrequenz verwendet. D. h. im HF-Teil der Empfänger wird ein in bezug auf die Teilspektren genügend breites, unabhängig von der Anzahl Benutzer fest vorgegebenes Frequenzband herausgefiltert. Aufgrund der Periodizität der Spektren (es handelt sich ja um ein digitales Signalübertragungsverfahren) sind alle Informationen im herausgefilterten Band vorhanden. Durch geeignete Mischung und Filterung im ZF-Bereich kann das benutzerspezifische Teilspektrum wieder in die richtige Form gebracht werden.

Diese Ausführungsvariante hat den Vorteil, dass beim Filtern die Anzahl Benutzer in der Zelle nicht zu berücksichtigen ist.

Die allenfalls vorhandenen Störsignale der übrigen Benutzer stellen dann eine zyklostationäre Interferenz dar, die mit bekannten Mitteln verhältnismässig gut eliminiert werden kann.

Die übertragenen Daten können mit einem MMSE-Equalizer (MMSE = Minimum Mean Square Error) detektiert werden, der als solcher bekannt ist. Die Daten können aber auch mit einem CDMA-Empfänger (matched filter-Empfänger) detektiert werden. Die Empfangsqualität ist dann allerdings auch nicht besser als bei einem CDMA-System. Es können auch verschiedene Varianten von Inversfilter-Empfängern implementiert werden. Es sind dann Vorkehrungen zu treffen, dass die Rauschanhebung nicht zu stark wird.

Grundsätzlich ist es möglich, dass verschiedene Mobilfunkteilnehmer mit verschiedenen Bit-Raten arbeiten.

Eine erfindungsgemässe Mobilfunkanlage umfasst mehrere Sendeeinrichtungen als Basisstationen und mehrere Mobilfunkteilnehmerstationen. Jede Sendeeinrichtung weist eine erste Schaltanordnung zum Spreizen der zu übertragenden Daten mit einer gegebenen Spreizsequenz und eine zweite Schaltanordnung zum Aufmodulieren der gespreizten Daten auf jeweils zugeordnete Trägerfrequenzen auf. Die erste Schaltanordnung ist so ausgebildet, dass alle zu übertragenden Signale mit derselben Spreizsequenz gespreizt werden. Die zweite Schaltanordnung ihrerseits ist derart ausgebildet, dass verschiedene Datenströme stets auf verschiedene Trägerfrequenzen aufmoduliert werden. Die beiden Schaltanordnungen können dabei in beliebiger Reihenfolge auftreten.

Eine dritte Schaltanordnung entfernt unerwünschte Seitenbänder und formt das Spektrum. Diese Schaltanordnung kann dazu benutzt werden, aus dem theoretisch periodischen und unendlich breiten Spektrum einen Teil mit einer Mittenfrequenz auszufiltern, die ungleich obiger Trägerfrequenz ist. Eine mögliche Ausführungsform ist deshalb auch, dass jeder Mobilfunkteilnemer schliesslich mit derselben Mittenfrequenz arbeitet, unabhängig von der senderseitigen Frequenzzuteilung. Es ist natürlich auch möglich, dass nur einzelne oder mehrere Mobilfunkteilnehmerstationen dieselbe Mittenfrequenz filtern.

Die dritte Schaltanordnung bestimmt also die jeweilige Mittenfrequenz und filtert unerwünschte Seitenbänder weg.

Das erfindungsgemässe Datenübertragungsverfahren wird vorzugsweise im "Down-Link", d. h. zur Uebertragung der Daten von den Basisstationen zu den Mobilfunkteilnehmerstationen eingesetzt.

Vorzugsweise sind die Sendeeinrichtungen benachbarter Zellen entweder auf verschiedene Spreizsequenzen oder auf verschiedene Trägerschwingungen für verschiedene Mobilfunkteilnehmerstationen eingerichtet. (Im Prinzip können die beiden Varianten auch kombiniert werden.) Dazu sind die erste und/oder die zweite Schaltanordnung entsprechend zu programmieren.

Mit Vorteil handelt es sich bei der Mobilfunkteilnehmerstation um ein mobiles digitales Funktelefon, Fax- oder sonstiges handliches Kommunikationsgerät, das eine auf dem MMSE-Equalizer-Prinzip beruhende Empfängerschaltung aufweist.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Nachfolgend soll die Erfindung anhand von Ausführungsbeispielen und im Zusammenhang mit den Zeichnungen näher erläutert werden. Es zeigen:

Fig. 1         Ein Schema eines zellularen Mobilfunksystems;

Fig. 2a-e     die spektrale Verteilung der Signale des erfindungsgemässen CFDMA-Systems;

Fig. 3         ein Blockschaltbild einer erfindungsgemässen Sendeeinrichtung;

Fig. 4         ein Blockschaltbild eines MMSE-Equalizer-Empfängers;

Fig. 5         den mittleren quadratischen Fehler (MMSE) bei verschiedenen Zweiwegkanälen und verschiedener Anzahl von Benutzern;

Fig. 6         den mittleren quadratischen Fehler (MMSE) in Abhängigkeit des Verhältnisses von Bit-Energie zu Rauschen für verschiedene Zweiwegkanäle und unterschiedlich viele Benutzer.

**Wege zur Ausführung der Erfindung**

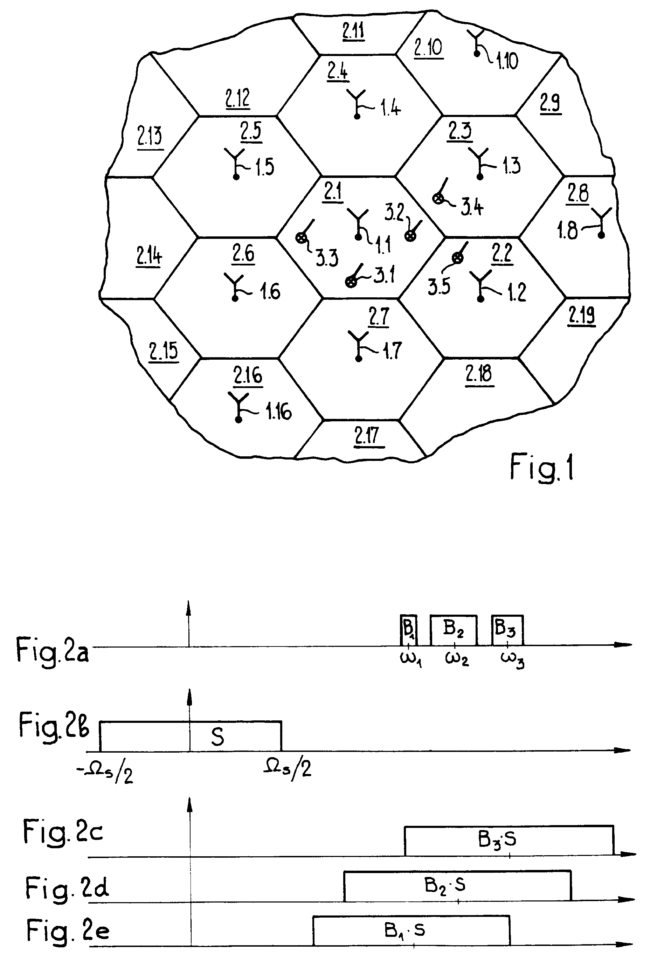

In Fig. 1 ist ein Ausschnitt aus einem zellularen Mobilfunksystem schematisch dargestellt. Das zu versorgende Gebiet ist in Zellen 2.1, ..., 2.19 aufgeteilt, wobei jede durch eine Sendeeinrichtung 1.1, 1.2, 1.3, ... versorgt wird. Ferner gibt es mehrere Mobilfunkteilnehmerstationen 3.1, ..., 3.5, im folgenden kurz MFTS genannt, die sich frei bewegen können und mit denen es eine Funkverbindung zwecks Datenübertragung aufrecht zu erhalten gilt.

Gemäss der Erfindung sind die MFTS 3.1, 3.2, 3.3 durch die Benutzung jeweils unterschiedlicher Trägerfrequenzen $w_1$, $w_2$, $w_3$ voneinander getrennt. Die zu verschiedenen MFTS 3.1, 3.2, 3.3 gehörenden Uebertragungssignale lassen sich im Prinzip vollständig voneinander trennen. Um den typischerweise durch Mehrwegausbreitung bedingten frequenzselektiven Schwund kompensieren zu können, sind alle Uebertragungssignale mit einer PN-Sequenz gespreizt. Die Spreizung mit PN-Sequenzen, insbesondere mit m-Sequenzen, ist als solche aus der DSSS-Technik bekannt.

Gemäss der Erfindung benutzen alle MFTS 3.1, 3.2, 3.3, die in derselben Zelle 2.1 sind, die gleiche PN-Sequenz. Gemäss einer bevorzugten Ausführungsform werden in benachbarten Zellen unterschiedliche PN-Sequenzen benutzt. Im Beispiel gemäss Fig. 1 benutzen die MFTS 3.2, 3.4, 3.5 in den paarweise benachbarten Zellen 2.1 resp. 2.3 resp. 2.2 je andere PN-Sequenzen.

Grundsätzlich sind Methoden zur Festlegung der Verteilung von PN-Sequenzen bekannt, womit sichergestellt werden kann, dass in einem zellularen Mobilfunksystem benachbarte Zellen stets unterschiedliche PN-Sequenzen benutzen. Werden beispielsweise drei unterschiedliche PN-Sequenzen $M_1$, $M_2$, $M_3$ (sequence cluster size 3) verwendet, dann könnte die Verteilung wie folgt aussehen: $M_1$ in den Zellen 2.1, 2.8, 2.10, 2.12, 2.14, 2.16, 2.18; $M_2$ in den Zellen 2.2, 2.4, 2.6, 2.9, 2.13, 2.17; $M_3$ in den Zellen 2.3, 2.5, 2.7, 2.11, 2.15, 2.19.

Wird eine grössere Zahl von unterschiedlichen PN-Sequenzen zur Verfügung gestellt, dann wird der Abstand zwischen denjenigen Zellen, die die gleiche PN-Sequenz benutzen, grösser (sequence cluster size > 3).

Anstatt dafür zu sorgen, dass benachbarte Zellen unterschiedliche Spreizsequenzen benutzen, können auch die Trägerfrequenzen in benachbarten Zellen derart gewählt sein, dass keine doppelt benutzt wird. Dann sind nicht nur die Uebertragungssignale derselben, sondern auch diejenigen benachbarter Zellen orthogonal zueinander. Es leuchtet ein, dass in diesem Fall im ganzen Mobilfunksystem die gleiche PN-Sequenz benutzt werden kann (sequence cluster size = 1), was erhebliche Implementierungsvorteile haben kann.

Was in Bezug auf die Verwendung von mehreren PN-Sequenzen gesagt worden ist, gilt sinngemäss für die Wahl der Trägerschwingungen in den einzelnen Zellen.

In den Fig. 2a-e ist die Zuteilung der Frequenzen resp. Frequenzbänder für die drei MFTS 3.1, 3.2, 3.3 schematisch dargestellt. Gemäss Fig. 2a ist jedem Benutzer eine Trägerfrequenz $w_1$, $w_2$, $w_3$ mit entsprechenden Bändern $B_1$, $B_2$, $B_3$ zugeteilt. Die genannten Bänder $B_1$, $B_2$, $B_3$ sind strikt voneinander getrennt. Jedes dieser drei Frequenzbänder $B_1$, $B_2$, $B_3$ wird mit einer Spreizsequenz (mit der Bandbreite S gemäss Fig. 2) gespreizt. Die Bandbreite S ist in der Regel viel grösser als der Abstand der Trägerfrequenzen $w_1$, $w_2$, $w_3$. Es entstehen deshalb drei teilweise überlappende, gegeneinander frequenzmässig verschobene Uebertragungssignale gemäss Fig. 2c-e. Dies gilt sinngemäss für grössere Benutzerzahlen. Die Ausdehnung der Bandbreite gegenüber CDMA beträgt 1 + K/N , wobei K = Anzahl Benutzer, N = Spreizfaktor.

Durch entsprechende andersartige Filterungen können aus den theoretisch periodischen und unendlich breiten Spektren andere Teile ausgefiltert werden mit Mittenfrequenzen $v_1$, $v_2$, $v_3$, die ungleich den obigen Trägerfrequenzen $w_1$, $w_2$, $w_3$ sind. Eine mögliche Ausführungsform ist deshalb auch, dass alle Benutzer dieselbe Mittenfrequenz verwenden, d. h. $v_1 = v_2 = v_3$.

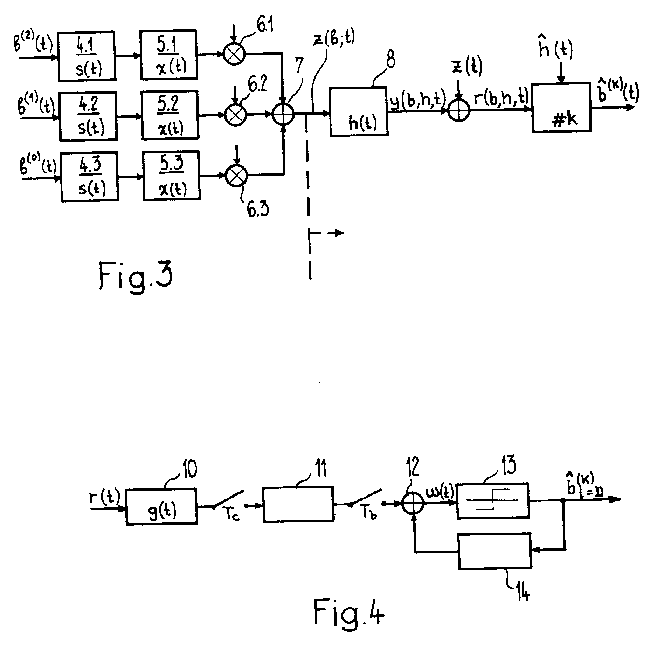

Fig. 3 zeigt ein Blockschaltbild der Sendeeinrichtung und der Signalübertragung zur MFTS des Benutzers Nr. k. Im vorliegenden Beispiel bedient die Sendeeinrichtung der Basisstation drei Benutzer. Es werden also drei digitale Datenströme $b^{(1)}(t)$, $b^{(2)}(t)$, $b^{(3)}(t)$ in je einem Spreizer 4.1, 4.2, 4.3 mit ein und derselben PN-Sequenz s(t) gespreizt. Dabei gilt $2\pi/T_c = N2\pi/T_b$ , wobei N die Länge der PN-Sequenz ist.

Die gespreizten Datensignale werden jeweils in einem Pulsformer 5.1, 5.2, 5.3 mit einem geeigneten Puls _chi(t) gefaltet. Danach werden die geglätteten gespreizten Datensignale in je einem Modulator 6.1, 6.2, 6.3 den jeweiligen Trägerschwingungen $w_1$, $w_2$, $w_3$ aufmoduliert. Ein Summierer 7 überlagert die drei zu übertragenden Signale. Das oben erwähnte Filter ist in dieser Figur nur teilweise ausgebildet (_chi).

Bei der Uebertragung über einen (Mobilfunk)Kanal 8 (typischerweise im Sinn der Mehrwegausbreitung) wird das Signal verzerrt und verrauscht (weisses Rauschen z(t)). Das Empfangssignal $r(\underline{b}, h; t)$ wird vom Empfängerschaltkreis 9 demoduliert und entspreizt zwecks Rückgewinnung der geschätzten Daten $\hat{b}^{(k)}(t)$. Die Kanalstossantwort h(t) wird mit einem hier nicht näher erläuterten, an sich bekannten Verfahren ermittelt und dem Empfängerschaltkreis 9 zugeführt.

Um den Empfängerschaltkreis "anzulernen", kann eine vorbekannte Datensequenz übertragen werden.

Fig. 4 zeigt ein Blockschaltbild einer erfindungsgemässen Empfängerschaltung. Aus dem Empfangssignal r(t) wird mit einem Vorfilter 10 mit der Stossantwort g(t) der für den Benutzer relevante Teil des Spektrums herausgeschnitten. Danach wird das vorgefilterte Empfangssignal entsprechend der Chip-Rate $T_c$ abgetastet. In einem nachfolgenden Feedforward-Filter 11, das als Transversalfilter ausgebildet ist, wird das Signal entspreizt und ein Teil der Interferenzen unterdrückt. Es folgt eine zweite Reduktion der Datenrate auf die Bit-Rate $1/T_b$. In einem Addierer 12 wird das Ausgangssignal eines Feedback-Filters 14 hinzugegeben. Das Ganze wird in den Entscheider 13 eingegeben, der die übertragenen Daten $\hat{b}^{(k)}_{i-D}$ schätzt (D = durch die Filter eingeführte Verzögerung). Die genannten Ausgangsdaten werden zugleich dem Feedback-Filter 14 zugeführt.

Die Koeffizienten der beiden Transversalfilter (Feedforward-Filter 11 und Feedback-Filter 14) sind nach dem MMSE-Prinzip gegeben. Ihre Berechnung ergibt sich beispielsweise aus dem Appendix zum Artikel "Cyclostationary Crosstalk Suppression ..." (vgl. S. 647 und 648: Koeffizienten des Vektors $U^T$ als Lösung der dortigen Gleichung 12). Das Feedforward-Filter 11 kann ein Fractionally Spaced-Filter sein.

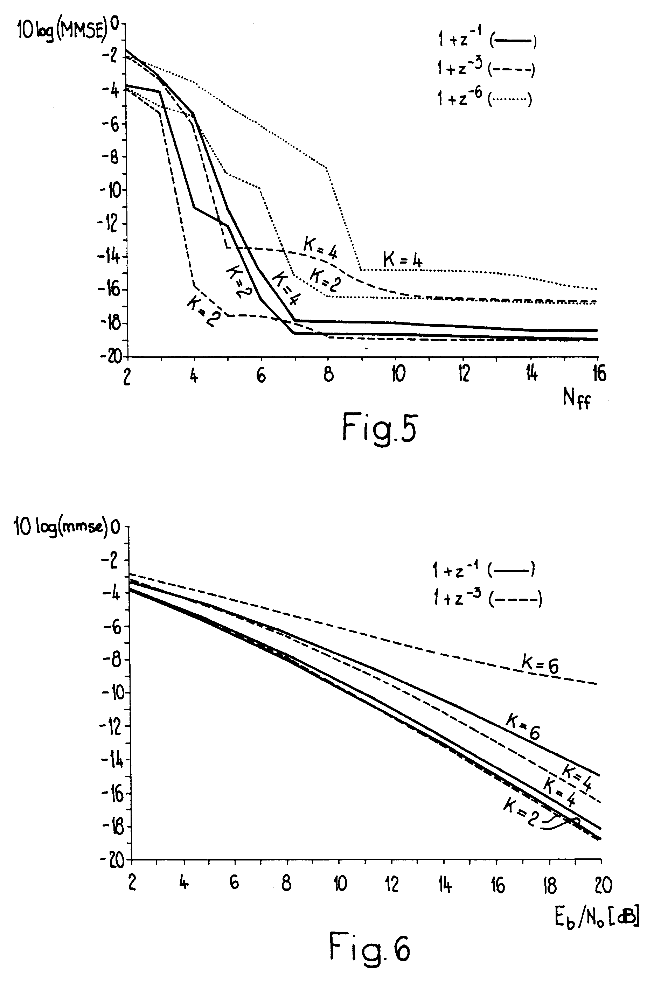

Im folgenden werden anhand der Fig. 5 und 6 Fehlerkurven für den oben genannten MMSE-Equalizer-Empfänger in einem erfindungsgemässen CFDMA-System gezeigt.

In Fig. 5 ist der mittlere quadratische Fehler (MMSE) logarithmisch als Funktion der Anzahl Stützstellen $N_{ff}$ des Feedforward-Filters 11 dargestellt. Der Uebertragungskanal ist ein Zweiwegkanal, bei welchem der zweite Pfad dieselbe Leistung wie der erste hat. Zum Spreizen wurde die Sequenz - - - + + - + (Hexadezimaldarstellung $72_{16}$) verwendet. Die für die Rauschleistung massgebliche Grösse $E_b/N_0$ ($E_b$ = Bit-Energie; $N_0$ = Rauschleistung) wurde auf 20 dB festgesetzt. Parameter sind die Verzögerung zwischen den zwei Pfaden des Kanals und die Anzahl K der Störer. Ein Fehler von 20 dB entspricht dem Wert, welcher in einem AWGN-Kanal (AWGN = Additive White Gaussian Noise) erreicht werden kann. Die Darstellung zeigt, dass bei 16 Stützstellen die Degradation weniger als 4 dB beträgt, selbst wenn die Anzahl der Benutzer 4 ist (duty factor: 4/7). D. h. drei andere Benutzer mit derselben Signalleistung wirken als Störer. Ferner zeigen die Kurven, dass selbst grosse Verzögerungen die Performance nicht wesentlich verschlechtern.

In Fig. 6 ist der mittlere quadratische Fehler (MMSE) logarithmisch in Funktion von $E_b/N_0$ dargestellt. Es wurde derselbe Spreizcode wie in den Beispielen gemäss Fig. 5 zugrunde gelegt. Parameter sind einerseits die Verzögerung zwischen den Pfaden des Kanals und andererseits die Anzahl K der Benutzer. Aus dem Verlauf der Kurven kann geschlossen werden, dass CFDMA-Signale nicht empfindlich gegenüber Aenderungen der Störleistung im Bereich der interessierenen $E_b/N_0$-Werte sind (Zahl der interferierenden Signale: K-1). Es ist zu beachten, dass das System gemäss Fig. 6 bei K = 6 Benutzern stark belastet ist und dass deshalb eine Verminderung der Signalqualität in schlechten Kanälen auftreten kann.

Aus alledem kann geschlossen werden, dass der MMSE-Equalizer-Empfänger für CFDMA-Signale sehr leistungsfähig ist. Der Verlust gegenüber dem optimalen Empfänger ist gering. Das erfindungsgemässe CFDMA-System (CFDMA = Code Frequency Division Multiple Access) kombiniert die Vorteile von FDMA und CDMA. In einem AWGN-Kanal sind die Benutzer orthogonal wie beim FDMA. In frequenzselektiven Kanälen wird die Fähigkeit des CDMA, Mehrwegausbreitung aufzulösen, aufrechterhalten. Die Störung der Benutzer untereinander (Inter-User Interference), die bei Mehrwegkanälen auftritt, kann durch Equalizer aufgelöst werden, die nur schwach von der Störung abhängen. Bei einer Approximation 1. Ordnung müssen sich diese Equalizer nur an den zeitvariierenden Kanal anpassen. Dies ist ein grosser Vorteil gegenüber Systemen, bei welchen der Equalizer die stochastischen Aenderungen der Interferenzen durch andere Benutzer verfolgen muss. Schliesslich erweist sich der MMSE-Equalizer-Empfänger selbst bei starker Auslastung als sehr leistungsfähig.

Da pro Zelle nur ein einziger Spreizcode erforderlich ist und das ganze System daher mit sehr wenig solchen Codes auskommt, können Empfängergeräte gebaut werden, die mit spezialisierter Hardware, wie z. B. SAW-Filtern, ausgerüstet werden können. Jeder Empfänger braucht nur einige wenige solcher Filter. Beim Installieren der Sendeeinrichtungen kommt man dann meist um eine (einfache) Codeplanung nicht herum (vgl. dazu Fig. 1 oben).

**Patentansprüche**

1. Verfahren zur Uebertragung von Daten in einem zellularen Mobilfunksystem mit einer stationären Sendeeinrichtung (1.1, ..., 1.16) für jede Zelle (2.1, ..., 2.19) und mehreren Mobilfunkteilnehmern (3.1, ..., 3.5) in einer Zelle (z. B. 2.1), wobei die Daten zwecks Uebertragung jeweils mit einer PN-Sequenz gespreizt und einer Trägerschwingung aufmoduliert werden, um dann als Uebertragungssignale übermittelt zu werden, wobei innerhalb einer Zelle (2.1, ..., 2.19) alle Uebertragungssignale mit derselben PN-Sequenz gespreizt werden, dadurch gekennzeichnet, dass verschiedene Uebertragungssignale in gegeneinander um ein ganzzahliges Vielfaches von $2\pi/T_b$, $T_b$ = Bitdauer der nicht gespreizten Datensignale, verschobenen Frequenzbändern ($B_1 \cdot S$, $B_2 \cdot S$, $B_3 \cdot S$) übertragen werden.

2. Verfahren nach Anspruch 1, dadurch gekennzeichnet, dass in benachbarten Zellen (2.1, 2.2, 2.3) die Uebertragungssignale stets mit unterschiedlichen PN-Sequenzen gespreizt werden.

3. Verfahren nach Anspruch 1 oder 2, dadurch gekennzeichnet, dass in benachbarten Zellen (2.1, 2.2, 2.3) verschiedene Uebertragungssignale stets in verschiedenen Frequenzbändern übertragen werden.

4. Verfahren nach einem der Ansprüche 1 bis 3, dadurch gekennzeichnet, dass empfängerseitig Spektralanteile herausgefiltert werden, deren Mittenfrequenz ungleich der Frequenz der die zu detektierenden Daten übertragenden Trägerschwingung ist, wobei insbesondere mehrere Mobilfunkteilnehmer (3.1, ..., 3.3) derselben Zelle (2.1) dieselbe Mittenfrequenz benutzen.

5. Verfahren nach einem der Ansprüche 1 bis 4, dadurch gekennzeichnet, dass die übertragenen Daten mit einem MMSE-Equalizer detektiert werden.

6. Verfahren nach einem der Ansprüche 1 bis 5, dadurch gekennzeichnet, dass in allen Uebertragungssignalen die Daten mit der gleichen Datenrate übertragen werden.

7. Mobilfunkanlage mit mehreren Sendeeinrichtungen (1.1, ..., 1.16) als Basisstationen und mehreren Mobilfunkteilnehmerstationen (3.1, ..., 3.5) zur Durchführung des Verfahrens nach Anspruch 1, wobei jede Sendeeinrichtung (1.1, ..., 1.16) eine erste Schaltanordnung zum Spreizen der zu übertragenden Signale mit einer gegebenen PN-Sequenz und eine zweite Schaltanordnung zum Aufmodulieren von Daten auf jeweils zugeordnete Trägerfrequenzen ($w_1$, $w_2$, $w_3$) aufweist, und die erste Schaltanordnung (4.1, 4.2, 4.3) so ausgebildet ist, dass alle zu übertragenden Signale mit derselben PN-Sequenz s(t) gespreizt werden, dadurch gekennzeichnet, dass die Sendeeinrichtungen so ausgebildet sind dass verschiedene Uebertragungssignale in gegeneinander um ein ganzzahliges Vielfaches von $2\pi/T_b$, $T_b$ = Bitdauer der nicht gespreizten Datensignale, verschobenen Frequenzbändern übertragen werden und dass die zweite Schaltanordnung (6.1, 6.2, 6.3) so ausgebildet ist, dass die für verschiedene Mobilfunkteilnehmerstationen (3.1, ..., 3.3) bestimmten Daten auf je verschiedenen Trägerfrequenzen ($w_1$, $w_2$, $w_3$) aufmoduliert werden.

8. Mobilfunkanlage nach Anspruch 7, dadurch gekennzeichnet, dass mehrere Sendeeinrichtungen (1.1, ..., 1.16) vorhanden sind und dass deren erste Schaltanordnungen (4.1, 4.2, 4.3) so ausgebildet sind, dass in benachbarten Sendeeinrichtungen (1.1, ..., 1.16) verschiedene PN-Sequenzen verwendet werden.

9. Mobilfunkanlage nach Anspruch 7 oder 8, dadurch gekennzeichnet, dass die Mobilfunkteilnehmerstationen (3.1, ..., 3.5) eine auf dem MMSE-Equalizer-Prinzip beruhende Empfängerschaltung (10; 11, 12, 13, 14) aufweisen.

10. Sendeeinrichtung für eine Mobilfunkanlage nach Anspruch 7, welche eine erste Schaltanordnung zum Spreizen der zu übertragenden Signale mit einer gegebenen PN-Sequenz und eine zweite Schaltanordnung zum Aufmodulieren von Daten auf jeweils zugeordnete Trägerfrequenzen ($w_1$, $w_2$, $w_3$) aufweist, und die erste Schaltanordnung (4.1, 4.2, 4.3) so ausgebildet ist, dass alle zu übertragenden Signale mit derselben PN-Sequenz s(t) gespreizt werden, dadurch gekennzeichnet, dass die Sendeeinrichtungen so ausgebildet sind dass verschiedene Uebertragungssignale in gegeneinander um ein ganzzahliges Vielfaches von $2\pi/T_b$, $T_b$ = Bitdauer der nicht gespreizten Datensignale, verschobenen Frequenzbändern übertragen werden und dass die zweite Schaltanordnung (6.1, 6.2, 6.3) so ausgebildet ist, dass die für verschiedene Mobilfunkteilnehmerstationen (3.1, ..., 3.3) bestimmten Daten auf je verschiedene Trägerfrequenzen ($w_1$, $w_2$, $w_3$) aufmoduliert werden.

**Claims**

1. Method of transmitting data in a cellular mobile radio system having a stationary transmitter (1.1, ..., 1.16) for each cell (2.1, ..., 2.19) and a plurality of mobile radio subscribers (3.1, ..., 3.5) in a cell (for example 2.1), wherein the data, for the purpose of transmission, are each expanded with a PN sequence and modulated on to a carrier oscillation in order then to be transmitted as transmission signals, wherein within a cell (2.1, ..., 2.19) all transmission signals are expanded with the same PN sequence, characterised in that different transmission signals are transmitted in frequency bands (B1 • S, B2 • S, B3 • S) that are displaced relative to one another by an integral multiple of $2\pi/Tb$, Tb = bit duration of the non-expanded data signals.

2. Method according to claim 1, characterised in that in adjacent cells (2.1, 2.2, 2.3) the transmission signals are always expanded with different PN sequences.

3. Method according to claim 1 or 2, characterised in that in adjacent cells (2.1, 2.2, 2.3) different transmission signals are always transmitted in different frequency bands.

4. Method according to any one of claims 1 to 3, characterised in that at the receiving end spectral components whose centre frequency is different from the frequency of the carrier oscillation transmitting the data to be detected are filtered out, wherein especially a plurality of mobile radio subscribers (3.1, ..., 3.3) in the same cell (2.1) use the same centre frequency.

5. Method according to any one of claims 1 to 4, characterised in that the transmitted data are detected using an MMSE equalizer.

6. Method according to any one of claims 1 to 5, characterised in that in all transmission signals the data are transmitted at the same data rate.

7. Mobile radio system having a plurality of transmitters (1.1, ..., 1.16) as base stations and a plurality of mobile radio subscriber stations (3.1, ..., 3.5), for implementing the method according to claim 1, wherein each transmitter (1.1, ..., 1.16) has a first circuit arrangement for expanding the signals to be transmitted with a given PN sequence and a second circuit arrangement for modulating data on to respective associated carrier frequencies (w1, w2, w3), and the first circuit arrangement (4.1, 4.2, 4.3) is in such a form that all signals to be transmitted are expanded with the same PN sequence s(t), characterised in that the transmitters are so constructed that different transmission signals are transmitted in frequency bands that are displaced relative to one another by an integral multiple of $2\pi/Tb$, Tb = bit duration of the non-expanded data signals, and in that the second circuit arrangement (6.1, 6.2, 6.3) is in such a form that the data intended for different mobile radio subscriber stations (3.1, ..., 3.3) are each modulated on to different carrier frequencies (w1, w2, w3).

8. Mobile radio system according to claim 7, characterised in that a plurality of transmitters (1.1, ..., 1.16) are present and in that the first circuit arrangements (4.1, 4.2, 4.3) thereof are in such a form that different PN sequences are used in adjacent transmitters (1.1, ..., 1.16).

9. Mobile radio system according to claim 7 or 8, characterised in that the mobile radio subscriber stations (3.1, ..., 3.5) have a receiver circuit (10; 11, 12, 13, 14) based on the MMSE equalizer principle.

10. Transmitter for a mobile radio system according to claim 7, which transmitter has a first circuit arrangement for expanding the signals to be transmitted with a given PN sequence and a second circuit arrangement for modulating data on to respective associated carrier frequencies (w1, w2, w3), and the first circuit arrangement (4.1, 4.2, 4.3) is in such a form that all signals to be transmitted are expanded with the same PN sequence s(t), characterised in that the transmitters are so constructed that different transmission signals are transmitted in frequency bands that are displaced relative to one another by an integral multiple of $2\pi/Tb$, Tb = bit duration of the non-expanded data signals, and in that the second circuit arrangement (6.1, 6.2, 6.3) is in such a form that the data intended for different mobile radio subscriber stations (3.1, ..., 3.3) are each modulated on to different carrier frequencies (w1, w2, w3).

**Revendications**

1. Procédé de transmission de données dans un système radio cellulaire mobile comportant un dispositif fixe d'émission (1.1,...,1.16) pour chaque cellule (2.1,..., 2.19), et plusieurs abonnés radio mobiles (3.1,...,3.5) dans une cellule (par exemple 2.1), les données étant étalées, en vue de la transmission, respectivement selon une séquence PN et modulant une oscillation de porteuse, de manière à être transmis ensuite en tant que signaux de transmission, auquel cas tous les signaux de transmission possédant la même séquence PN sont étalés à l'intérieur d'une cellule (2.1,...,2.19), caractérisé en ce que différents signaux de transmission sont transmis dans des bandes de fréquences (B$_1$.S,B$_2$.S,B$_3$.S) qui sont décalées réciproquement d'un multiple entier de $2\pi/T_B$, avec T$_B$ = durée de bits des signaux de données non étalés.

2. Procédé selon la revendication 1, caractérisé en ce que les signaux de transmission sont toujours étalés avec des séquences PN différentes dans des cellules voisines (2.1,2.2,2.3).

3. Procédé selon la revendication 1 ou 2, caractérisé en ce que différents signaux de transmission sont transmis toujours dans des bandes de fréquences différentes, dans des cellules voisines (2.1,2.2,2.3).

4. Procédé selon l'une des revendications 1 à 3, caractérisé en ce que des composantes spectrales, dont la fréquence moyenne est différente de la fréquence de l'oscillation de porteuse transmettant les données à détecter, sont séparées par filtrage côté réception, auquel cas notamment plusieurs abonnés radio mobiles (3.1,...,3.3) de la même cellule (2.1) utilisent la même fréquence centrale.

5. Procédé selon l'une des revendications 1 à 4, caractérisé en ce que les données transmises sont détectées à l'aide d'un égaliseur MMSE.

6. Procédé selon l'une des revendications 1 à 5, caractérisé en ce que dans tous les signaux de transmission, les données sont transmises avec la même cadence de données.

7. Installation radio mobile comportant plusieurs dispositifs d'émission (1.1,...,1.16) en tant que stations de base et plusieurs postes d'abonnés radio mobiles (3.1,...,3.5) pour la mise en oeuvre du procédé selon la revendication 1, dans laquelle chaque dispositif (1.1,..., 1.16) comporte un premier montage pour étaler les signaux à transmettre, possédant la séquence PN prédéterminée et un second montage pour moduler les fréquences porteuses respectives associées ($w_1$, $w_2$, $w_3$) au moyen des données, et le premier montage (4.1,4.2,4.3) est agencé de telle sorte que tous les signaux à transmettre sont étalés avec la même séquence PN (st), caractérisée en ce que les dispositifs d'émission sont agencés de telle sorte que différents signaux de transmission sont transmis dans des bandes de fréquences décalées les unes par rapport aux autres d'un multiple entier de $2\pi/T_b$, $T_b$ = durée de bits des signaux de données étalés, et que le second montage (6.1,6.2,6.3) est agencé de telle sorte que les données destinées aux différents postes d'abonnés radio mobiles (3.1,...,3.3) modulent différentes fréquences porteuses respectives ($w_1$,$w_2$,$w_3$).

8. Installation radio mobile selon la revendication 7, caractérisée en ce que plusieurs dispositifs d'émission (1.1,...,1.16) sont prévus et que leurs premiers montages (4.1,4.2,4.3) sont agencés de telle sorte que des séquences PN différentes sont utilisées dans des dispositifs d'émission voisins (1.1,...,1.16).

9. Installation radio mobile selon la revendication 6 ou 8, caractérisée en ce que les postes d'abonnés radio mobiles (3.1,...,3.5) possèdent un circuit de réception (10;11,12,13,14) qui est basé sur le principe de l'égaliseur MMSE.

10. Dispositif d'émission pour une installation radio mobile selon la revendication 7, qui comporte un premier montage pour étaler les signaux à transmettre avec une séquence PM prédéterminée, un second montage pour moduler des fréquences porteuses respectives associées ($w_1$,w2,w3) par des données, et dans lequel le premier montage (4.1,4.2,4.3) est agencé de telle sorte que les signaux à transmettre sont étalés avec la même séquence PN (st), caractérisé en ce que les dispositifs d'émission sont agencés de telle sorte que différents signaux de transmission sont transmis dans des bandes de fréquences décalées les unes par rapport aux autres d'un multiple entier de $2\pi/T_b$, $T_b$ = durée de bits des signaux de données étalés, et que le second montage (6.1,6.2,6.3) est agencé de telle sorte que les données destinées aux différents postes d'abonnés radio mobiles (3.1,...3.3) modulent différentes fréquences porteuses respectives ($w_1$,$w_2$,$w_3$).

Fig.1

Fig.2a

Fig.2b

Fig.2c

Fig.2d

Fig.2e

$\beta^{(2)}(t)$ | 4.1 $s(t)$ | 5.1 $\chi(t)$ | ⊗ 6.1

$\beta^{(1)}(t)$ | 4.2 $s(t)$ | 5.2 $\chi(t)$ | ⊗ 6.2

$\beta^{(0)}(t)$ | 4.3 $s(t)$ | 5.3 $\chi(t)$ | ⊗ 6.3

7 · $z(\beta;t)$ · 8 $h(t)$ · $y(b,h,t)$ · $z(t)$ · $r(b,h,t)$ · $\hat{h}(t)$ · #k · $\hat{b}^{(k)}(t)$

## Fig.3

$r(t)$ | 10 $g(t)$ | $T_c$ | 11 | $T_b$ | 12 $w(t)$ | 13 | $\hat{b}^{(k)}_{i=D}$

14

## Fig.4

Fig.5

Fig.6